Europäisches Patentamt

European Patent Office

Office européen des brevets

(11) Veröffentlichungsnummer: **0 057 273**
A2

(12) # EUROPÄISCHE PATENTANMELDUNG

(21) Anmeldenummer: **81109845.8**

(22) Anmeldetag: **24.11.81**

(51) Int. Cl.³: **A 23 C 21/00**, A 23 C 7/04

(30) Priorität: **02.02.81 DE 3103412**

(43) Veröffentlichungstag der Anmeldung: **11.08.82**
**Patentblatt 82/32**

(84) Benannte Vertragsstaaten: **DE FR GB IT NL**

(71) Anmelder: **Röhm GmbH, Kirschenallee Postfach 4242, D-6100 Darmstadt 1 (DE)**

(72) Erfinder: **Best, Edwin, Georg-Storm-Strasse 34, D-6108 Weiterstadt 1 (DE)**
Erfinder: **Plainer, Hermann, Dr., Am Wembach 15, D-6107 Reinheim 1 (DE)**
Erfinder: **Sprössler, Bruno, Dr., Auf der Schmelz 93, D-6101 Rossdorf (DE)**

(54) **Verfahren zur Entfernung der Trübstoffe aus der Molke.**

(57) Die Erfindung betrifft ein Verfahren zur Entfernung der Trübstoffe aus der Molke, wobei zu der im pH-Bereich zwischen 3,8 und 5,2 befindlichen Molke ohne Wärmezufuhr polyanionische Flockungsmittel zugesetzt werden und nach Ausfällen der Trübstoffe ohne zu erwärmen die Ausfällung von der, die Molkeproteine noch im wesentlichen in gelöster Form enthaltenden Molke abgetrennt wird.

Verfahren zur Entfernung der Trübstoffe aus der Molke

Im ersten Schritt der Käseherstellung wird das Casein der Milch mit Hilfe der Milchsäuregärung oder durch Lab (Rennin) zum Gerinnen gebracht. Dabei bildet die Milch eine Gallerte (Koagulum, Bruch). Beim folgenden Schritt der Schrumpfung der Gallerte, als Folge mechanischer und thermischer Behandlung, wird der überwiegende Teil des eingeschlossenen Wassers, das noch Milchzucker (Lactose), Molkenproteine, Salze usw. enthält, die sogenannte Molke abgetrennt. Gleichzeitig reichert sich die Käsemasse (der Bruch) an Eiweiß, Fett und Mikroorganismen an.

Molke und Bruch können mit verschiedenen Hilfsmitteln, beispielsweise mit Siebtüchern, Metallsieben oder -trommeln, durch Ausschöpfen in Formen, durch Abziehen oder Zentrifugieren usw. voneinander getrennt werden.

Die in großen Mengen anfallende Süß- oder Sauermolke ist normalerweise trübe. Im Gegensatz zur Milch stellt sie eine instabile kolloidale Lösung dar. Beim Stehen bildet sich ein Bodensatz. pH-Verschiebungen oder Temperaturerhöhungen können leicht zu Ausfällungen führen. Diese Trübstoffe können die weitere Bearbeitung der Molke empfindlich stören.

Die Molke hat wertvolle Inhaltsstoffe, wie z.B. Proteine, Salze usw.; den Hauptbestandteil, ca. 4 - 5 Gew.-%, macht jedoch die Lactose aus. Ernährungsphysiologisch ist der Milchzucker ziemlich wertlos, ja er hat sich bei bestimmten Gruppen der Weltbevölkerung als schädlich erwiesen (genetisch bedingte Lactose-Intoleranz).

Die technische Verarbeitung der Molke konzentriert sich daher einerseits auf die Gewinnung und/oder den Abbau von Proteinen, andererseits auf die hydrolytische Spaltung der Lactose in ihre Bestandteile Glucose und Galactose.
Für die Verarbeitung der Molke in einem mit feinen Partikeln gefüllten Reaktor (Fließbett-/Festbettreaktor) ist die vorherige Klärung nahezu unerläßlich, da die Trübstoffe im Dauerbetrieb den Reaktor verstopfen würden.

Es bestand daher die Aufgabe ein technisches Verfahren zur Klärung der Molke (d.h. Befreiung von allen Trübstoffen) zur Verfügung zu stellen, wobei der Molke wertvolle Inhaltsstoffe, insbesondere die Proteine, in möglichst geringem Umfang entzogen werden sollten. Darüber hinaus sollte das Verfahren möglichst energiesparend, schonend und mit möglichst geringem apparativem Aufwand durchführbar sein.
Klare Molke wird bereits in beträchtlichem Umfang erzeugt, hauptsächlich durch Ultrafiltration. Das Verfahren der Ultrafiltration ist indessen aufwendig und teuer. Die Proteine werden im Filter zurückgehalten. Mit Milch oder

- 3 -

ultrafiltrierter Molke läßt sich die Lactosespaltung, beispielsweise unter Verwendung von trägergebundenen Enzymen in einem Festbettreaktor, durchführen. Für trübe Molke kommt nur die Verarbeitung im Fließbettreaktor infrage, wobei aber, wie bereits erwähnt, stets die Gefahr der Verstopfung des Reaktors besteht. Es hat nicht an Versuchen gefehlt, das Verfahren der Ultrafiltration durch einfachere und wohlfeilere Verfahren zu ersetzen, meist mit dem Ziel, das gesamte Protein - durch Ausfällung - zu gewinnen.

Neben rein physikalischen Verfahren, z.B. Ausfällen der Proteine durch Erhitzen, wurde mit einigem Erfolg die Anwendung von Flockungs- bzw. Komplexierungsmitteln versucht. So wurden z.B. Carboxymethylcellulose (BE-PS 850 020), Natriumginat (US-PS 3 404 142), Tonmineralien (DE-PS 1 204 922), Polyphosphate (DE-PS 1 008 220), Polyäthylenglykol [R. Richter et al. in J. Dairy Sci. 57 (7), 793-6 (1974)], Calciumchlorid (GB-PS 1 400 913), Laurylsulfat (DE-OS 26 22 015) zur Ausfällung des Proteins empfohlen. In der US-PS 3 252 961 wird ein Verfahren zur Proteingewinnung aus Molke vorgeschlagen, bei dem zunächst eine Hitzefällung des Proteins im mäßig sauren pH-Bereich und eine anschließende Behandlung mit 10 - 200 ppm eines anionischen Flockungsmittels erfolgt.

Die Verfahren des Standes der Technik stellen jedoch keine Lösung der oben genannten Aufgabe dar: Nämlich der Entfernung aller Trübstoffe aus der Molke in rationeller und möglichst schonender Weise mit der Auflage, daß die wertvollen Inhaltsstoffe der Molke, insbesondere die Proteine, möglichst vollständig in der Molke verbleiben sollen.

Es wurde nun ein Verfahren zur Entfernung der Trübstoffe (des Trubs) aus der Molke gefunden, wobei die der Molke eigenen Proteine weitestgehend in der Lösung verbleiben, wenn man der im sauren pH-Bereich, vorzugsweise zwischen pH 3,8 und 5,2, besonders bevorzugt zwischen pH 4 und 5, speziell bei pH 4,5 befindlichen Molke ein anionisches Flockungsmittel zusetzt, vorzugsweise die Ausfällung der Trübstoffe durch Bewegen unterstützt, und die Abtrennung der Ausfällung in an sich bekannter Weise vornimmt.

Als anionische Flockungsmittel im Sinne der vorliegenden Erfindung kommen bevorzugt Homopolymere der Acrylsäure und Copolymere des Acrylamids und der Acrylsäure infrage. Acrylamid und Acrylsäure stehen im Verhältnis 90 zu 10 bis 0 zu 100 Gew.-Teilen, vorzugsweise 90 zu 10 bis 30 zu 70 Gew.-Teilen. Die Acrylamid-Acrylsäure-Copolymeren können noch weitere Comonomeren enthalten, in der Regel in untergeordneten Anteilen. Beispielsweise kommen als Comonomere weitere wasserlösliche Comonomere, wie Methacrylamid, Methacrylsäure, Maleinsäure, Vinylsulfonsäure, Vinylpyrrolidon, Vinylimidazol, Hydroxyalkylester, wie z.B. 2-Hydroxyethylacrylat, Aminoalkylester, wie z.B. Dimethylaminoethylacrylester, auch in seiner quaternierten Form, sowie N-Methylolverbindungen des (Meth)acrylamids, wie z.B. N-Methylolacrylamid oder an sich nicht-wasserlösliche Comonomere, wie Acrylnitril oder $C_1$-$C_4$-Ester der (Meth)acrylsäure infrage.

Der Anteil an Comonomeren neben Acrylamid/Acrylsäure liegt in der Regel bei 0 bis 10 Gew.-%, vorzugsweise bei 0 bis 2 Gew.-%, bezogen auf das Gesamtpolymerisat. Die Herstellung der erfindungsgemäß verwendbaren, anionischen Flockungsmittel ist an sich bekannt. Vorzugsweise besitzt das Acrylamid/Acrylsäurecopolymere ein Molgewicht $\bar{M}$ von mindestens $1 \cdot 10^6$. Besonders bevorzugt sind Polymere mit einem Molgewicht in der Größenordnung $1 \cdot 10^7$.

Im allgemeinen liegt beim vorliegenden Verfahren der Zusatz des anionischen Polyelektrolyten bei 1 - 500 ppm; besonders bevorzugt ist ein Zusatz des anionischen Flockungsmittels entsprechend 10 - 100 ppm. Das polyanionische Flockungsmittel wird in der Regel in Form einer wäßrigen Lösung, gegebenenfalls unter Beachtung von Hersteller-Empfehlungen, eingesetzt. Im allgemeinen liegt die Polymerkonzentration im Lösungsmittel bei 0,1 bis 10 Gew.-%. Als Richtwert kann eine ca. 1 %ige Lösung angenommen werden. Man wird zweckmäßigerweise eine möglichst konzentrierte Lösung ansetzen, um das Substrat nicht unnötig zu verdünnen. Außerdem wird man zum Lösen einen pH im Neutralen oder Alkalischen einstellen.

Das Verfahren kann wie folgt durchgeführt werden: Zunächst wird für die Einstellung des vorgesehenen pH-Wertes Sorge getragen. Bei Süßmolke und bei schwach saurer Molke kann dies durch Zugabe einer geeigneten Säure, insbesondere einer physiologisch unbedenklichen Säure, wie Salzsäure, Essigsäure, Phosphorsäure, Milchsäure bzw. gegebenenfalls eines entsprechenden Puffers geschehen. Bei Sauermolke muß gegebenenfalls durch Zugabe einer unbedenklichen Base, wie Alkali oder Soda der gewünschte pH-Wert eingestellt werden. Bevorzugt ist der pH-Bereich 4 - 5, speziell ein Wert um pH = 4,5.

Das erfindungsgemäße Verfahren wird im allgemeinen ohne jedes Erwärmen, d.h. bei Raumtemperatur ($22° \pm 5°C$, wobei gegebenenfalls gekühlt werden kann) durchgeführt. Vorzugsweise geschieht die Zugabe des Flockungsmittels unter Bewegung (Rühren) der Molke.

Zur Unterstützung der Ausfällung setzt man zweckmäßig die Bewegung, d.h. das Rühren über einen gewissen Zeitraum fort und läßt anschließend noch einige Zeit stehen. Im allgemeinen ist der Gesamtvorgang der Ausscheidung der Trübstoffe nach ca. 2 bis 2 1/2 Stunden abgeschlossen, wobei das Einbringen des Flockungsmittels (unter Rühren) in der Regel 2 bis 20 min in Anspruch nimmt (je nach Größe des Ansatzes), gefolgt von weiterem Rühren, vorzugsweise schnellerem Rühren über einen Zeitraum bis etwa 15 min, vorzugsweise etwa 10 min, und Stehenlassen des Ansatzes etwa 2 Stunden bei Raumtemperatur. Schnelles Rühren empfiehlt sich vor allem zur Verbesserung der Flotation. Ein längeres Stehenlassen erhöht die Dichte der Fällung. Es liegt innerhalb der Routine des Fachmanns, in Abhängigkeit von der Qualität der Molke und in geringerem Grad der sonstigen Variablen des Verfahrens die günstigsten Bedingungen für den konkreten Fall herauszufinden.

Die Abtrennung der Fällung kann in an sich bekannter Weise, beispielsweise durch Abschöpfen, wenn sie flotiert, oder durch Zentrifugieren, Abhebern, Ablassen in einem Trenngefäß usw., wenn sie sich am Boden absetzt, erreicht werden.

Die nach dem erfindungsgemäßen Verfahren behandelte Molke weist allenfalls in dicker Schicht eine leichte Trübung auf. Sie kann für die eingangs geschilderten Zwecke, beispielsweise für den Dauerbetrieb eines Festbettreaktors problemlos verwendet werden. Um gegebenenfalls absolute Trübfreiheit zu erreichen, kann die Molke in an sich bekannter Weise behandelt, beispielsweise filtriert werden. Nach den vorliegenden Ergebnissen beträgt der Proteinverlust bei der Ausfällung der Trübstoffe nach dem erfindungsgemäßen Verfahren unter 20 %, in der Regel unter 15 %.

Die Ausbeute an trübungsfreier Molke nach Durchführung des Verfahrens liegt bei über 95 %.

In der Regel liegt der Restgehalt an Flockungsmittel in der Molke nach Abschluß des Verfahrens bei < 1 ppm.

Das folgende Beispiel dient zur Erläuterung des erfindungsgemäßen Verfahrens.

Bei der Herstellung der erfindungsgemäß zu verwendenden polyanionischen Flockungsmittel kann z.B. gemäß FR-PS 1 237 969 bzw. GB-PS 1 260 206 oder US-PS 3 912 607 bzw. GB-PS 1 216 105 oder US-PS 3 948 740 bzw. DE-PS 1 089 173 bzw. DE-PS 2 009 218 verfahren werden.

Beispiel

Ansatz:  100 1 Süßmolke aus der Emmentaler Produktion (5 % Lactose, 0,8 % Protein) 50 ppm anionisches Flockungsmittel
Handelsprodukt Praestol 2935(R)
der Fa. Stockhausen, zugelassen zur
Wasserbehandlung.
Copolymeres Acrylamid/Na-Salz der
Acrylsäure im Verhältnis 60:40,
MG 5-10 Mill.

Die Süßmolke wird mit halbkonzentrierter Salzsäure auf pH = 4,5 gebracht. Dann gibt man bei Raumtemperatur innerhalb von 10 min 50 ppm des anionischen Flockungsmittels in 1 %iger wäßriger Lösung unter gutem Rühren zu.
Nach 10 minütigem, schnellen Rühren läßt man den Ansatz zwei Stunden bei Raumtemperatur stehen. Die Trübstoffe flotieren und können abgeschöpft werden.
Die nun nahezu klare Molke kann durch ein K 10-Filter filtriert werden, wodurch sie absolut blank wird.
Anschließend wird sie über ein EK-Filter entkeimt. Die Molke hat einen Gehalt von 0,7 % Molkeprotein. In der Molke kann kein Flockungsmittel nachgewiesen werden (Nachweisgrenze 1 ppm).

Verfahren zur Entfernung der Trübstoffe aus der Molke

Patentansprüche

1. Verfahren zur Entfernung der Trübstoffe aus der Molke unter Verwendung von polyanionischen Flockungsmitteln,

dadurch gekennzeichnet,

daß man der im pH-Bereich zwischen 3,8 und 5,2 befindlichen Molke ohne Wärmezufuhr polyanionische Flockungsmittel zusetzt und nach Ausfällen der Trübstoffe ohne zu erwärmen die Ausfällung von der, die Molkeproteine noch im wesentlichen gelöst enthaltenden Molke abtrennt.

2. Verfahren gemäß Anspruch 1, dadurch gekennzeichnet, daß man als polyanionisches Flockungsmittel Polyacrylsäure oder ein Copolymeres des Acrylamids und der Acrylsäure jeweils mit einem mittleren Molgewicht $\overline{M} > 1 \cdot 10^{6}$ verwendet.

3. Verfahren gemäß Anspruch 2, dadurch gekennzeichnet, daß das Polymere aus Acrylamid und Acrylsäure im Verhältnis 90 : 10 bis 0 : 100 Gew.-Teilen besteht.

4. Verfahren gemäß den Ansprüchen 1 bis 3, dadurch gekennzeichnet, daß man das polyanionische Flockungsmittel in Form einer, vorzugsweise neutralisierten Lösung mit 0,1 bis 10 Gew.-% Polymergehalt zusetzt.

5. Verfahren gemäß den Ansprüchen 1 bis 4, dadurch gekennzeichnet, daß der Zusatz des polyanionischen Flockungsmittels einem Gehalt von 1 - 500 ppm, bezogen auf die eingesetzte Molke, entspricht.

6. Verfahren gemäß den Ansprüchen 1 bis 5, dadurch gekennzeichnet, daß man das polyanionische Flockungsmittel unter Rühren zusetzt und vorzugsweise noch während eines bestimmten Zeitraums nachrührt.